# EUROPEAN PATENT SPECIFICATION

(11) **EP 0 563 744 B1**
(45) Date of publication and mention of the grant of the patent: **09.09.1998**
(21) Application number: 93104710.4
(22) Date of filing: 22.03.1993
(51) Int. Cl.: C23F 1/02, C25F 3/14

(54) **Method of electrochemical fine processing**
Verfahren zur elektrochemischen Feinbearbeitung
Procédé d'usinage électrochimique fin

(30) Priority: 30.03.1992 JP 74733/92; 31.03.1992 JP 78031/92
(43) Date of publication of application: 06.10.1993
(73) Proprietor: SEIKO INSTRUMENTS INC., Tokyo 136 (JP)
(72) Inventor: Suda, Masayuki, c/o Seiko Instruments Inc., Koto-ku, Tokyo (JP); Sakuhara, Toshihiko, c/o Seiko Instruments Inc., Koto-ku, Tokyo (JP); Shinogi, Masataka, c/o Seiko Instruments Inc., Koto-ku, Tokyo (JP); Iwasaki, Fumiharu, c/o Seiko Instruments Inc., Koto-ku, Tokyo (JP); Ando, Akito, c/o Seiko Instruments Inc., Koto-ku, Tokyo (JP)
(74) Representative: Fleuchaus, Leo, Dipl.-Ing.

(56) References cited:
- EP-A- 0 154 572
- CH-A- 352 541
- GB-A- 2 206 541
- US-A- 3 035 990

## Description

This invention relates to a method for performing electrochemical fine processing of a surface of a material such as a metal or semiconductor.

Electrochemical processing methods for manipulating substrate surfaces and creating patterns thereupon as such are well known in the prior art. For example, US-A-3 035 990 discloses a method of chemical blanking of aluminum by a hydroxide etchant in which the aluminum sheet is first anodized and then coated with a preselected resist pattern. Furthermore, EP-A-0 154 572 discloses a method for forming an electric circuit composed of a thin film of conductor or semiconductor disposed on an insulator substrate wherein a stylus electrode attacks the thin film to form insulation traces by electroerosion based on a micro-arc discharge in a surrounding medium.

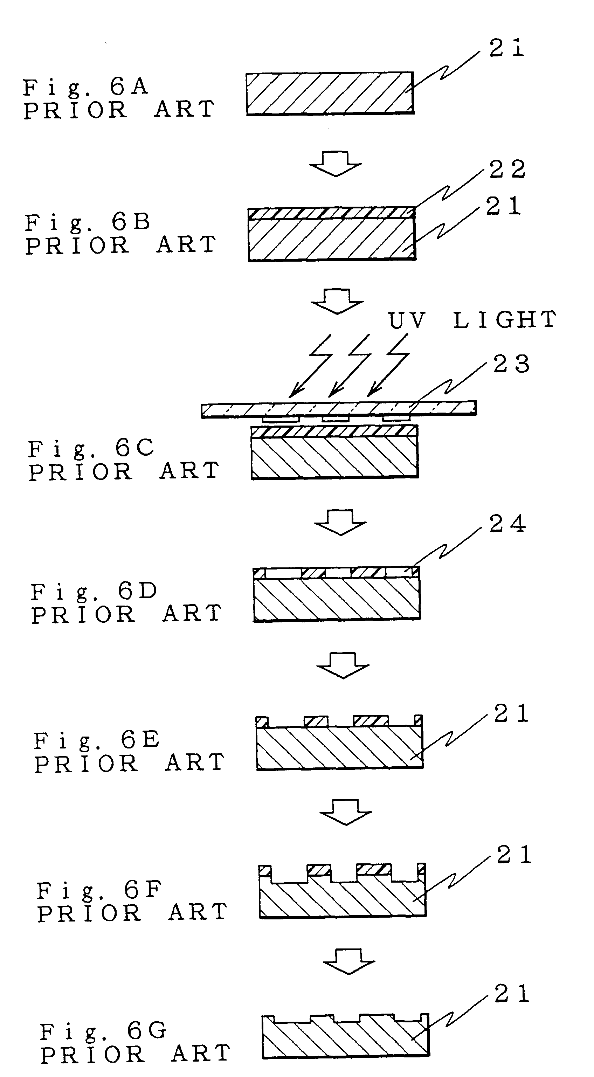

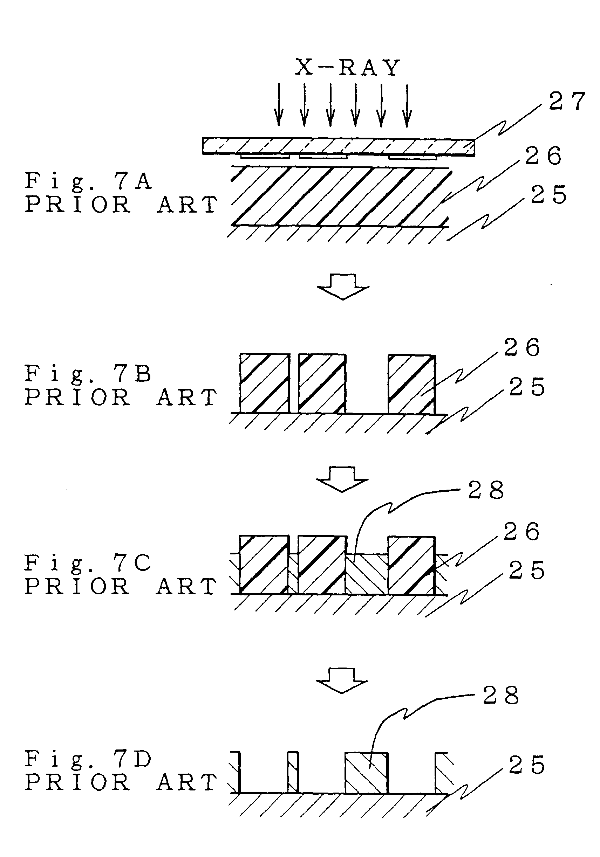

In another method known in the prior art when the fine processing of the surface of an article to be processed is performed, a technique called the photolithography has been generally used. The outline of this technique is shown in Figs. 6A-6G. At first, a resin (photoresist) 22 having photosensitivity and resistance to chemicals is applied on the surface of the article to be processed 21 (Fig. 6B), and ultraviolet light is irradiated through a mask 23 (Figs. 6C and 6D). Next, a sensitized photoresist 24 is removed by development and rinse, and by allowing the photoresist to remain on the article to be processed 21 exactly in accordance with a pattern drawn on the mask, the other portions are exposed (Fig. 6E). Then, in this method, immersing in a solution (etching solution) capable to dissolve the article to be processed, the exposed portions of the article to be processed 21 are selectively removed (Figs. 6F and 6G). In addition, a technique is also practically used in which no mask is used, and an electron beam is directly irradiated onto an article to be processed being applied with photoresist so as to form a pattern on the resist. At this time, it is also possible to make a structure having a high aspect ratio by selecting an etching solution. As another fine processing technique, there is the LIGA process, having been developed recently. The outline of this technique is shown in Figs. 7A - 7D. In Fig. 7A, an X-ray emitted from a synchrotron (synchrotron emission light) is used to perform patterning of a resist 26 such as acrylic or polymethylmethacrylate (PMMA) thickly applied on the surface of a metal substrate 25 by means of a mask 27. In Fig. 7B, an exposed resist is removed by development and rinse, and remaining portions of the resist 26 is used for a mold of casting. In Fig. 7C, a metal 28 is deposited in the mold by means of electrocasting e.g. In Fig. 7D, the mold of the resist 26 is removed and then a fine metal structure 28 is obtained on the metal substrate 25. The synchrotron emission light has characteristics such that the beam intensity is large, the linearity is strong and the expansion is less, so that it becomes possible to accurately and deeply sensitize a mask pattern onto a thickly applied resist. Therefore, when this technique is used, a fine three-dimensional shape having a high aspect ratio can be obtained.

However, in the conventional photolithography, there has been a problem such that because the photomask is a flat glass substrate, when the article to be processed has an excessively uneven portion thereon, a gap is generated between the photomask and the article to be processed, causing diffraction of ultraviolet light, so that it becomes difficult to accurately transfer the pattern of the mask onto the photoresist. In addition, in order to uniformly apply the photoresist onto the article to be processed, a technique called the spin-coat utilizing the centrifugal force is used, so that there is also a problem such that when there is a level difference on the surface, uniform application of the photoresist becomes difficult. Also when the electron beam is directly irradiated onto the resist, there is a problem of focusing the electron beam, so that it is difficult to perform patterning of a surface having complicated irregularity. Further, the LIGA process must use a synchrotron, resulting in a problem of the cost of the apparatus becoming too large.

### SUMMARY OF THE INVENTION

It is an object of the present invention to provide a method for conveniently forming a fine pattern directly onto uneven surface of an article to be processed in order to solve such conventional problems as described above.

According to the present invention this object is achieved by an electrochemical fine processing method according to independent claim 1. The dependent claims refer to preferred embodiments of the present invention.

In order to solve the above-mentioned problems, in the fine processing method of the present invention, a pattern which is corresponding to the conventional photoresist pattern is electrochemically formed on the surface of an article to be processed. In accordance with the invention, this is achieved by: a procedure in which either:
(1) a method in which an article to be processed and a counter electrode having a minute forward end are installed in a solution, and by bringing the minute forward end of the counter electrode close to the surface of the article to be processed and repeating an operation to electrochemically oxidize or reduce the surface of the article to be processed there while moving the counter electrode, a pattern is electrochemically formed on the surface of the article to be processed; or
(2) a method in which an article to be processed and a counter electrode having a minute forward end are installed in a solution, and by bringing the minute forward end of the counter electrode close to the surface of the article to be processed and repeating an operation to electrochemically deposit a substance onto the surface of the article to be processed there while moving the counter electrode, a pattern is electrochemically formed on the surface of the article to be processed; or
(3) a method in which the surface of an article to be processed is coated with another substance beforehand, the coated article to be processed and a counter electrode having a minute forward end are installed in a solution, and by bringing the minute forward end of the counter electrode close to the surface of the article to be processed and repeating an operation to electrochemically oxidize or reduce the coating substance on the surface of the article to be processed there while moving the counter electrode; then a pattern of the coating substance is formed on the surface of the article to be processed using either an etching solution which does not dissolve the coating substance before the oxidation-reduction but dissolves the coating substance after the oxidation-reduction, or an etching solution which oppositely dissolves the coating substance before the oxidation-reduction but does not dissolve the coating substance after the oxidation-reduction; to thereby form a pattern of the substance having different resistance against the etching solution from that of the article to be processed on the surface of the article to be processed. Thereafter, the processing is performed in the same manner as the conventional photolithography using an etching solution in which the formed pattern is not dissolved but the article to be processed is dissolved.

A fine processing apparatus for carrying out the above-mentioned fine processing method is constituted by a counter electrode having a minute forward end, a mechanism for moving the counter electrode to an optional position, and a mechanism for performing the control of an electrochemical electric potential of an article to be processed.

Moreover, the counter electrode having a plurality of minute forward ends performs the fine processing in a plurality of minute regions on the surface of the article to be processed.

In the fine processing method as described above, in the electrochemical cell provided with the counter electrode having a minute forward end, the minute forward end of the counter electrode is brought close to the surface of the article to be processed as far as possible, to form a field of electrochemical reaction only in the vicinity of the forward end of the counter electrode. And the electrochemical reaction of any one of the oxidation-reduction of the surface of the article to be processed, the deposition of the substance from the solution onto the surface of the article to be processed, or the oxidation-reduction of the coating substance coating the surface of the article to be processed beforehand is allowed to occur, however, these electrochemical reactions are limited to the vicinity of the forward end of the counter electrode. Thus, when this operation is repeated while moving the counter electrode along the surface of the article to be processed, the pattern can be electrochemically formed on the surface of the article to be processed. In this case, even if there is unevenness on the surface of article to be processed, when the position of the forward end of the counter electrode is supported so as to always maintain a constant distance from the article to be processed, there is no hindrance at all in forming electrochemically the pattern.

### BRIEF DESCRIPTION OF THE DRAWINGS

Figs. 1A - 1G are illustrative views showing an embodiment of the fine processing method of the present invention;
Figs. 2A - 2G are illustrative views showing another embodiment of the fine processing method of the present invention;
Figs. 3A - 3I are illustrative views showing another embodiment of the fine processing method of the present invention;
Fig. 4 is an illustrative view of a fine processing apparatus to be used for the present invention;
Fig. 5 is a side elevation showing an example of the structure of the counter electrode to be used for fine processing apparatus of the present invention;
Figs. 6A - 6G are illustrative views showing the conventional photolithography technique; and
Figs. 7A - 7D are illustrative views showing the conventional LIGA process.

### DETAILED DESCRIPTION OF THE PREFERRED EMBODIMENTS

The fine processing method of the present invention will be explained hereinafter on the basis of drawings.

### (Example 1)

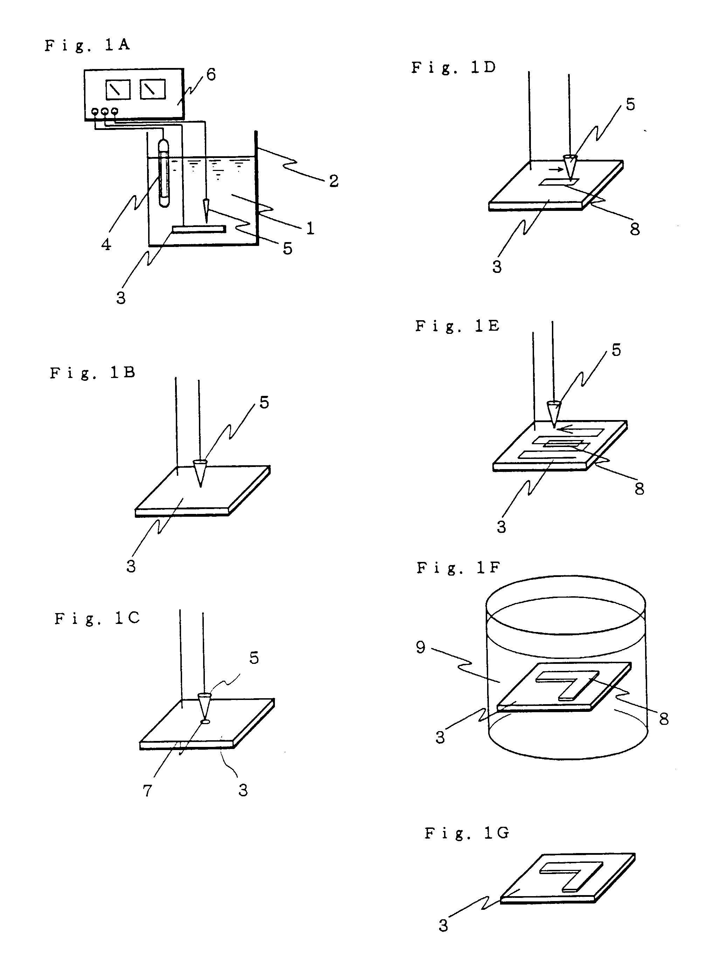

Figs. 1A - 1G illustratively show one example of the fine processing method of the present invention.

In Fig. 1A, an article to be processed 3, a reference electrode 4 and a counter electrode 5 are immersed in a container 2 filled with a solution 1, so as to constitute an electrochemical cell. Further, the article to be processed, the reference electrode and the counter electrode are electrically connected to a potentiostat 6, so that the electrochemical electric potential of the article to be processed can be controlled. In this case, the reference electrode is an electrode for generating an electric potential to serve as a standard in the case of controlling the electrode electric potential in the electrochemical reaction, for which generally the saturated calomel electrode (SCE) or the silver - silver chloride electrode is frequently used. In addition, the counter electrode has a shape having a minute forward end.

Incidentally, in the present example, the electrochemical cell has been constituted using a reference electrode, however, the reference electrode 4 is not always necessary, and it is also possible to constitute an electrochemical cell by two electrodes composed of the article subjected to the processing and the counter electrode. In such a case, a direct current electric source, which voltage can be optionally controlled, is used instead of the potentiostat.

In Fig. 1B, the forward end of the counter electrode 5 is installed at a position nearest to a portion to be processed of the article to be processed 3, and using the potentiostat 6, the electric potential of the article to be processed is set to an electric potential capable to electrochemically oxidize or reduce the article to be processed.

At this time, in Fig. 1C, the electrochemical reaction occurs at the surface of the article to be processed 3 in the vicinity of the forward end of the counter electrode 5, and the article to be processed itself becomes oxidized or reduced, thereby a thin film 7 comprising its oxidized or reduced product is formed on the surface. For example, when silicon is used as the article to be processed, if the electric potential is set to be not less than 0.86 V with respect to a standard hydrogen electrode, then it is possible to form a thin film of silicon oxide on the silicon surface.

In Fig. 1D, when the forward end of the counter electrode 5 is slowly moved on the surface of the article to be processed 3 in accordance with a processing shape while maintaining the above-mentioned electric potential, the thin film 7 is continuously formed in a region in which the counter electrode 5 moves, and a pattern 8 can be formed. At this time, it is necessary to always keep the distance between the article to be processed and the forward end of the counter electrode constant.

Alternatively, in Fig. 1E, the pattern 8 can be also formed in the same manner by scanning the counter electrode 5 from the end of the article to be processed 3 in accordance with a certain rule, and applying an electric potential when the counter electrode moves to a place where to perform the oxidation-reduction.

In Fig. 1F, when the necessary pattern could be formed on the surface of the article to be processed, the article to be processed is subsequently immersed in a solution (etching solution) 9 in which only the article to be processed is selectively dissolved but the pattern is not dissolved, so as to selectively remove only the portion not subjected to the pattern formation on the surface of the article to be processed, namely exposed portion. For example, when the pattern is formed on the silicon surface using silicon oxide, a mixed solution of hydrofluoric acid and nitric acid is used as the etching solution. This solution has a property not to dissolve silicon oxide but to dissolve silicon, so that it is possible to selectively dissolve the portion where silicon is exposed. Incidentally, before performing this operation, non-processing surfaces of the article to be processed should be coated beforehand with a substance having resistance against the etching solution.

Finally, in Fig. 1G, the pattern is removed with a solution which dissolves only the electrochemically formed pattern but does not dissolve the article to be processed 3 itself. For example, when the pattern is formed on the silicon surface with silicon oxide, a mixed solution of hydrofluoric acid and ammonium fluoride is used as the etching solution.

### (Example 2)

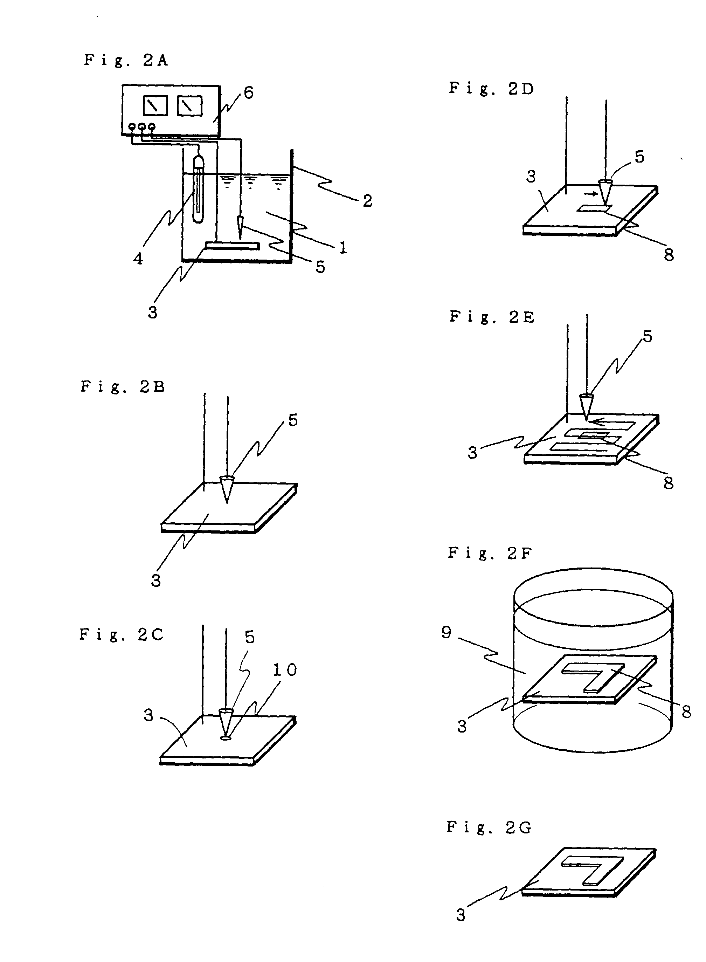

Figs. 2A - 2G illustratively show another example of the fine processing method of the present invention.

At first, in Fig. 2A, an article to be processed 3, a reference electrode 4 and a counter electrode 5 are immersed in a container 2 filled with a solution 1, so as to constitute an electrochemical cell. Further, the article to be processed, the reference electrode and the counter electrode are electrically connected to a potentiostat 6, so that the electrochemical electric potential of the article to be processed can be controlled. At this time, the article to be processed must be a substance having conductivity, or a substance with its surface coated with a substance having conductivity. In this case, the reference electrode is an electrode for generating an electric potential to serve as a standard in the case of controlling the electrode electric potential in the electrochemical reaction, for which generally the saturated calomel electrode (SCE) or the silver - silver chloride electrode is often used. In addition, the counter electrode has a shape having a minute forward end.

Incidentally, in the present example, the electrochemical cell has been constituted using the reference electrode, however, the reference electrode is not always necessary, and it is also possible to constitute an electrochemical cell by two electrodes composed of the article to be processed and the counter electrode. In such a case, a direct current electric source, which voltage can be optionally controlled, is used instead of the potentiostat.

In Fig. 2B, the forward end of the counter electrode 5 is installed at a position nearest to a portion to be processed of the article to be processed 3, and using the potentiostat 6, the electric potential of the article to be processed is set to an electric potential capable to electrochemically deposit the substance from the solution onto the article to be processed.

At this time, in Fig. 2C, the electrochemical reaction occurs at the surface of the article to be processed 3 in the vicinity of the forward end of the counter electrode 5, and a thin film 10 of the deposited substance is formed on the surface of the article to be processed. For example, when gold is used as the article to be processed, and the electric potential is set to be not more than -1.34 V with respect to a standard hydrogen electrode in a mixed solution of chromic acid and sulfuric acid, then it is possible to form a thin film of chromium on the surface to be processed (gold).

In Fig. 2D, when the forward end of the counter electrode 5 is slowly moved on the surface of the article to be processed 3 in accordance with a processing shape while maintaining the above-mentioned electric potential, the thin film 10 in Fig. 2C is continuously formed in a region in which the counter electrode 5 moves, and a pattern 8 can be formed. At this time, it is necessary to always keep the distance between the article to be processed and the forward end of the counter electrode constant.

Alternatively, in Fig. 2E, the pattern 8 can be also formed in the same manner by scanning the counter electrode 5 from the end of the article to be processed 3 in accordance with a certain rule, and applying an electric potential when the counter electrode moves to a place where the oxidation and reduction are performed.

In Fig. 2F, when the necessary pattern could be formed on the surface of the article to be processed, the article to be processed 3 is subsequently immersed in a solution (etching solution) 9 which selectively dissolves only the article to be processed but not the pattern, so as to selectively remove only the portion not subjected to pattern formation on the surface of the article to be processed, namely exposed portion. For example, when the pattern is formed on the gold surface using chromium, a solution containing iodine and potassium iodide is used as the etching solution. This solution has a property not to dissolve chromium but to dissolve gold, so that it is possible to selectively dissolve the portion where gold is exposed. Incidentally, before performing this operation, non-processing surfaces of the article to be processed should be coated beforehand with a substance having resistance against the etching solution.

Finally, in Fig. 2G, the pattern is removed with a solution in which only the electrochemically formed pattern is dissolved but the article to be processed 3 itself is not dissolved. For example, when the pattern is formed on the gold surface with chromium, an alkaline solution of potassium ferricyanide is used.

### (Example 3)

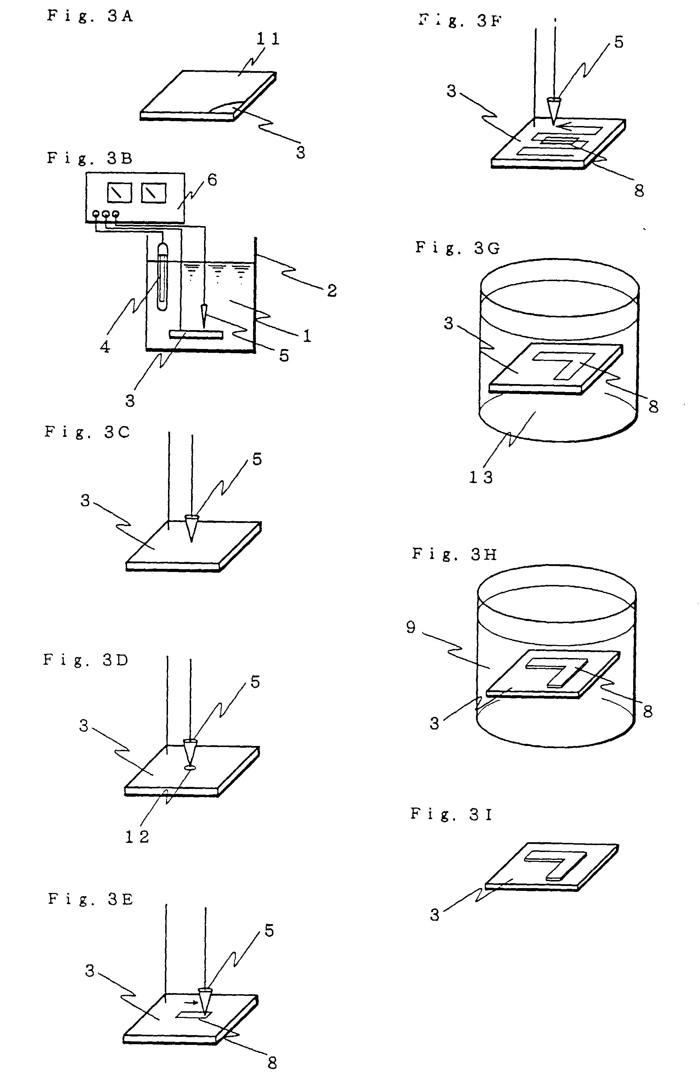

Figs. 3A - 3I illustratively show another example of the fine processing method of the present invention.

At first, in Fig. 3A, the surface of an article to be processed 3 is coated with a coating substance 11 in which the presence or absence of resistance against an etching solution can be changed by electrochemically performing oxidation or reduction. For example, when the article to be processed is gold, silicon is used as the coating substance to coat the surface by the chemical vapor deposition (CVD) method e.g. At this time, it is necessary to adjust the thickness of a coating film to a degree in permitting the electrochemical reaction to proceed from the surface of the coating film.

Next, in Fig. 3B, the article to be processed 3 coated with the coating substance 11, a reference electrode 4 and a counter electrode 5 are immersed in a container 2 filled with a solution 1, so as to constitute an electrochemical cell. Further, the article to be processed, the reference electrode and the counter electrode are electrically connected to a potentiostat 6, so that the electrochemical electric potential of the article to be processed can be controlled. In this case, the reference electrode is an electrode for generating an electric potential to serve as a standard when controlling the electrode electric potential in the electrochemical reaction, for which generally the saturated calomel electrode (SCE) or the silver - silver chloride electrode is often used. In addition, the counter electrode has a shape having a minute forward end. Incidentally, in the present example, the electrochemical cell has been constituted using a reference electrode, however, the reference electrode is not always necessary, and it is also possible to constitute an electrochemical cell by two electrodes composed of the article to be processed and the counter electrode. In such a case, a direct current electric source which voltage can be optionally controlled, is used instead of the potentiostat.

In Fig. 3C, the forward end of the counter electrode 5 is installed at a position nearest to the article to be processed 3, and using the potentiostat 6, the electric potential of the article to be processed is set to an electric potential capable to electrochemically oxidize or reduce the coating substance coating the surface of the article to be processed.

At this time, in Fig. 3D, the electrochemical reaction occurs at the surface of the article to be processed in the vicinity of the forward end of the counter electrode 5, and a thin layer 12 comprising an oxidation-reduction product of the coating substance is formed. For example, when silicon is coated on the surface of gold, if the electric potential is set to be not less than 0.86 V with respect to a standard hydrogen electrode, then it is possible to form a thin film of silicon oxide on a part of the silicon coating film.

In Fig. 3E, when the forward end of the counter electrode 5 is slowly moved on the surface of the article to be processed 3 in accordance with a processing shape while maintaining the above-mentioned electric potential, the thin layer 12 in Fig. 3D is continuously formed in a region in which the counter electrode 5 moves, and a pattern 8 can be formed. At this time, it is necessary to always keep the distance between the article to be processed and the forward end of the counter electrode constant.

Alternatively, in Fig. 3F, the pattern 8 can be also formed in the same manner by scanning the counter electrode 5 from the end of the article to be processed 3 in accordance with a certain rule, and applying an electric potential when the counter electrode moves to a place where to perform the oxidation-reduction.

In Fig. 3G, when the necessary pattern could be formed on the coating substance, the article to be processed 3 is subsequently immersed in either a solution in which the oxidation-reduction product of the coating substance is dissolved but the coating substance not subjected to oxidation-reduction is not dissolved, or a solution in which oppositely the oxidation-reduction product of the coating substance is not dissolved but the coating substance not subjected to oxidation-reduction is dissolved, so as to perform selective removal of the coating substance. For example, when the gold surface is coated with silicon, and electrochemically subjected to the pattern formation of silicon oxide, a mixed solution of hydrofluoric acid and nitric acid is used as the etching solution 13 for patterning. This solution dissolves silicon but does not dissolve silicon oxide, so that only silicon can be selectively dissolved.

Next, in Fig. 3H, the article to be processed is immersed in a solution (etching solution) 9 which selectively dissolves only the article to be processed 3 but does not dissolve the coating substance remaining on the surface of the article to be processed in Fig. 3G, to selectively remove only the portion where the article to be processed is exposed. For example, when the gold surface is coated with silicon, and electrochemically oxidized to form a pattern with silicon oxide, a solution containing iodine and potassium iodide is used as the etching solution. This solution has a property to not dissolve the silicon oxide but dissolve the gold, so that it is possible to selectively dissolve the portion where gold is exposed. Incidentally, before performing this operation, non-processing surfaces of the article to be processed should be coated beforehand with a substance having resistance against the etching solution.

Finally, in Fig. 3I, the pattern is removed with a solution in which the pattern remaining on the article to be processed in Fig. 3G is dissolved but the article to be processed 3 itself is not dissolved. For example, when the pattern is formed on the gold surface with silicon oxide, a mixed solution of hydrofluoric acid and ammonium fluoride is used as the etching solution.

Next, the fine processing apparatus to be used for the present invention will be explained using a drawing.

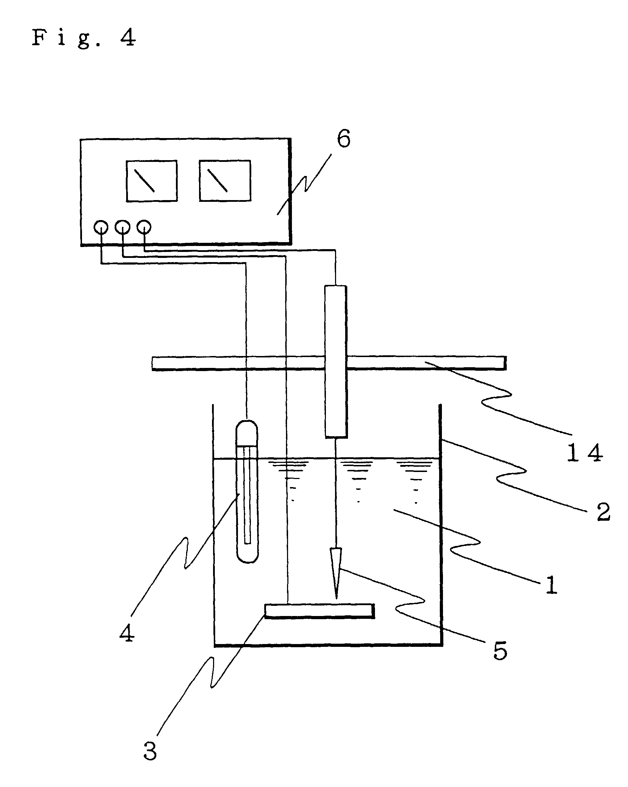

Fig. 4 is an illustrative view of a fine processing apparatus to be used for the present invention. An article to be processed 3, a reference electrode 4 and a counter electrode 5 are immersed in a solution 1 filled in a container 2, and further the article to be processed, the reference electrode and the counter electrode are electrically connected to a potentiostat 6. In this case, the reference electrode is an electrode for generating an electric potential to serve as a standard when controlling the electrode electric potential in the electrochemical reaction, for which generally the saturated calomel electrode (SCE) or the silver - silver chloride electrode is often used. In addition, the counter electrode is shaped to have a minute forward end. Incidentally, in this example, the electrochemical cell has been constituted using a reference electrode, however, the reference electrode is not always necessary, and it is also possible to constitute an electrochemical cell by two electrodes composed of the article to be processed and the counter electrode. In such a case, a direct current electric source which voltage can be optionally controlled, is used instead of the potentiostat.

The counter electrode is coated with an insulator except the forward end portion, which is supported by a movement mechanism 14 which can accurately move to an optional position on the article to be processed in a three-dimensional manner. In this case, the article to be processed is fixed, and the counter electrode is supported by the movement mechanism, however, on the contrary, it is also possible to provide a constitution in which the counter electrode is fixed, and the article to be processed is supported by the movement mechanism.

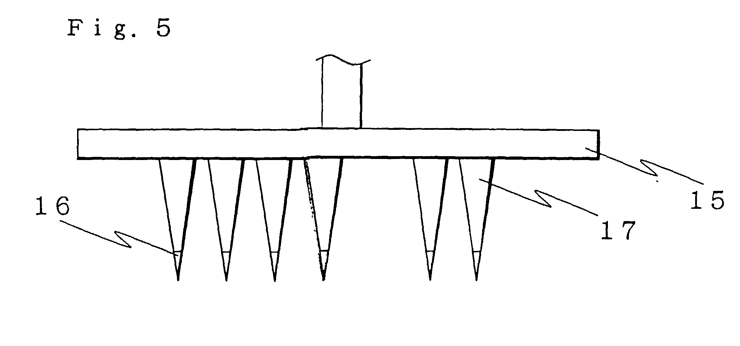

In addition, another example of the counter electrode 15 is shown in Fig. 5. The counter electrode 15 has a plurality of projections 16 arranged in accordance with the shape to be processed. Therefore, the processing can be simultaneously performed in a plurality of minute regions on the surface of the article to be processed. The portions of the projections 16 other than the forward ends are coated with an insulator 17.

The counter electrode is moved by the movement mechanism to a position where the processing of the article to be processed is intended to be performed, and further the distance between the article to be processed and the counter electrode is kept sufficiently small and constant. Next, using the potentiostat, the electric potential of the article to be processed is set to be any one of an electric potential at which the article to be processed is subjected to oxidation-reduction, an electric potential at which the coating substance coating the article to be processed is subjected to oxidation-reduction, or an electric potential at which the substance is deposited from the solution onto the article to be processed. These electrochemical reactions occur in an isotropic manner under the center of the forward end portion of the counter electrode which is most adjacent to the article to be processed when the surface of the article to be processed is smooth and has no defect. These electrochemical reactions simultaneously occur at a plurality of places in the case of a plurality of projections, so that when a plurality of projections are arranged on the counter electrode in accordance with an aimed processing shape, it becomes possible to simultaneously perform the processing along the shape. Further, continuously form a pattern can be easily performed by slowly moving the counter electrode using the movement mechanism while maintaining this electric potential.

As explained above, by using the fine processing method of the present invention, it has become possible to electrochemically form the pattern having different resistance against the etching solution from that of the article to be processed on the article to be processed. This pattern formation, different from the conventional photolithography, can be performed with no trouble by maintaining the distance between the counter electrode and the article to be processed even when the article to be processed has uneven surface. In addition, it has become possible to perform easily the pattern formation without necessitating a large-scale apparatus such as a synchrotron.

## Claims

1. An electrochemical fine processing method comprising the steps of:
preparing an article (3) to be processed which is composed of a metal or semiconductor in an electrolytic solution (1), wherein the article (3) is composed of a material having changeable etching resistance against an etching solution and wherein the etching resistance is changed by an electrochemical reaction;
placing a minute forward end of a counter electrode (5) close to a surface of the article (3) to be processed;
forming a pattern (8) of a substance having different etching resistance against an etching solution from that of the article (3) to be processed by bringing the minute forward end of the counter electrode (5) close to the surface of the article (3) to be processed, applying an electric potential to the counter electrode (5) and repeating an operation of the electrochemical reaction in a minute region of the article (3) to be processed in the vicinity of the counter electrode (5), wherein the distance between the article (3) to be processed and the forward end of the counter electrode (5) is kept constant during the operation of the electrochemical reaction; and
etching the article (3) to be processed in an etching solution having a property of different etching rate for the pattern forming portion and a portion other than the pattern forming portion.

2. An electrochemical fine processing method according to claim 1; wherein the electrochemical reaction is oxidation reaction to form an oxidized substance of the article (3) to be processed for forming the pattern (8).

3. An electrochemical fine processing method according to claim 1; wherein the electrochemical reaction is reduction reaction to form a reduced substance of the article (3) to be processed for forming the pattern (8).

4. An electrochemical fine processing method according to claim 1; wherein the electrochemical reaction is deposition reaction to form a deposited substance from the electrolytic solution on the article (3) to be processed for forming the pattern (8).

5. An electrochemical fine processing method according to claim 2 or 3, wherein a surface of the article (3) to be processed is coated with a coating substance having changeable etching resistance against an etching solution.

6. An electrochemical fine processing method according to claim 1; wherein the etching solution has a property to dissolve the pattern forming portion of the article (3) to be processed and not to dissolve a portion other than the pattern forming portion of the article (3) to be processed.

7. An electrochemical fine processing method according to claim 1; wherein the etching solution has a property not to dissolve the pattern forming portion of the article (3) to be processed and to dissolve a portion other than the pattern forming portion of the article (3) to be processed.

8. An electrochemical fine processing method according to claim 1; wherein the counter electrode (15) has a plurality of projections (16) each having a minute forward end arranged in accordance with a shape to be processed.

## Patentansprüche

1. Ein Verfahren zur elektrochemischen Feinbearbeitung enthaltend die folgenden Schritte:
Zubereiten eines herzustellenden Artikels (3), der aus einem Metall oder Halbleiter besteht, in einer elektrolytischen Lösung (1), in dem der Artikel (3) aus einem Material besteht, das einen veränderbaren Ätzwiderstand gegen eine Ätzlösung hat, und in dem der Atzwiderstand durch eine elektrochemische Reaktion verändert wird;
Einrichten einer vorderen Spitze einer Gegenelektrode (5) nahe an einer Oberfläche des zu bearbeitenden Artikels;
Ausbilden eines Musters (8) mit einem anderen Ätzwiderstand gegen eine Ätzlösung, als dem des zu bearbeitenden Artikels (3) durch Bringen der vorderen Spitze der Gegenelektrode (5) in die Nähe des zu bearbeitenden Artikels (3) unter Anlegen eines elektrischen Potentials an die Gegenelektrode (5) und Wiederholen einer Operation der elektrochemischen Reaktion in einem winzigen Bereich des zu bearbeitenden Artikels (3) in der Nähe der Gegenelektrode (5), wobei der Abstand zwischen dem zu bearbeitenden Artikel 3 und der vorderen Spitze der Gegenelektrode (5) während der Operation der elektrochemischen Reaktion konstant gehalten wird; und
Ätzen des zu bearbeitenden Artikels (3) in einer Ätzlösung mit der Eigenschaft einer unterschiedlichen Ätzrate für den musterformenden Teil und einem anderen, nicht-musterformenden Teil.

2. Ein Verfahren zur elektrochemischen Feinbearbeitung gemäß Anspruch 1, in dem die elektrochemische Reaktion eine Oxidationsreaktion ist, um eine oxidierte Substanz des zu bearbeitenden Artikels (3) auszubilden, der zwecks Ausbildens des Musters (8) bearbeitet wird.

3. Ein Verfahren zur elektrochemischen Feinbearbeitung gemäß Anspruch 1, in dem die elektrochemische Reaktion eine Reduktionsreaktion ist, um eine reduzierte Substanz des zu bearbeitenden Artikels (3) auszubilden, der zwecks Ausbildens des Musters (8) bearbeitet wird.

4. Ein Verfahren zur elektrochemischen Feinbearbeitung gemäß Anspruch 1, in dem die elektrochemische Reaktion eine Ablagerungsreaktion ist, um eine aus der elektrolytischen Lösung auf den zu bearbeitenden Artikels (3) abgelagerte Substanz auszubilden, der zwecks Ausbildens des Musters (8) bearbeitet wird.

5. Ein Verfahren zur elektrochemischen Feinbearbeitung gemäß Anspruch 2 oder 3, in dem eine Oberfläche des zu bearbeitenden Artikels (3) mit einer Deckschicht überzogen wird, die einen veränderbaren Atzwiderstand gegen eine Ätzlösung aufweist.

6. Ein Verfahren zur elektrochemischen Feinbearbeitung gemäß Anspruch 1, in dem die Ätzlösung die Eigenschaft hat, den musterbildenden Teil des zu bearbeitenden Artikels (3) zu lösen, sowie die Eigenschaft, einen anderen Teil als den musterbildenden Teil des zu bearbeitende Artikels (3) nicht zu lösen.

7. Ein Verfahren zur elektrochemischen Feinbearbeitung gemäß Anspruch 1, in dem die Ätzlösung die Eigenschaft hat, den musterbildenden Teil des zu bearbeitenden Artikels (3) nicht zu lösen, sowie die Eigenschaft, einen anderen Teil, als den musterbildenden Teil des zu bearbeitende Artikels (3) zu lösen.

8. Ein Verfahren zur elektrochemischen Feinbearbeitung gemäß Anspruch 1, in dem die Gegenelektrode (15) eine Vielzahl von Vorsprüngen (16) aufweist, deren jeder eine vordere Spitze hat, die gemäß einer zu bearbeitenden Form angeordnet sind.

## Revendications

1. Procédé d'usinage électrochimique fin comprenant les étapes consistant en :
la préparation d'un article (3) à usiner qui est composé d'un métal ou d'un semi-conducteur plongé (placé) dans une solution électrolytique (1), dans lequel l'article (3) est composé d'un matériau ayant une résistance variable à la gravure au contact d'une solution de gravure et dans lequel la résistance à la gravure varie sous l'effet d'une réaction électrochimique;
la mise en place d'une minuscule extrémité ou pointe avant d'une contre-électrode (5) à proximité d'une surface de l'article (3) devant être usiné;
la formation d'un motif (8) d'une substance ayant une résistance à la gravure au contact d'une solution de gravure différente de celle de l'article (3) devant être usiné en amenant la minuscule extrémité ou pointe avant de la contre-électrode (5) à proximité de la surface de l'article (3) devant être usiné, l'application d'un potentiel électrique à la contre-électrode (5) et la reproduction d'une étape de réaction électrochimique dans une minuscule région de l'article (3) à usiner à proximité de la contre-électrode (5), procédé dans lequel la distance entre l'article (3) à usiner et l'extrémité ou la pointe avant de la contre-électrode est maintenue à un niveau constant au cours de l'étape de réaction électrochimique; et
la gravure de l'article (3) à usiner dans une solution de gravure qui de par sa nature présente une vitesse de gravure différente selon qu'il s'agit de la partie génératrice de motifs ou d'une partie autre que la partie génératrice de motifs.

2. Procédé d'usinage électrochimique fin selon la revendication 1; dans lequel la réaction électrochimique est une réaction oxydative destinée à former une substance oxydée de l'article (3) devant être usiné pour former le motif (8).

3. Procédé d'usinage électrochimique fin selon la revendication 1; dans lequel la réaction électrochimique est une réaction réductrice destinée à former une substance réduite de l'article (3) devant être usiné pour former le motif (8).

4. Procédé d'usinage électrochimique fin selon la revendication 1; dans lequel la réaction électrochimique est une réaction de dépôt destinée à former un dépôt de substance à partir de la solution électrolytique sur l'article (3) devant être usiné pour former le motif (8).

5. Procédé d'usinage électrochimique fin selon la revendication 2 ou 3, dans lequel une surface de l'article (3) devant être usiné est recouverte d'une substance de revêtement ayant une résistance variable à la gravure au contact d'une solution de gravure.

6. Procédé d'usinage électrochimique fin selon la revendication 1; dans lequel la solution de gravure est de nature à dissoudre la partie ou portion formant le motif de l'article (3) devant être usiné et à ne pas dissoudre la partie ou portion autre que la partie ou portion formant le motif de l'article (3) devant être usiné.

7. Procédé d'usinage électrochimique fin selon la revendication 1; dans lequel la solution de gravure est de nature à ne pas dissoudre la partie ou portion formant le motif de l'article (3) devant être usiné et à dissoudre la partie ou portion autre que la partie ou portion formant le motif de l'article (3) devant être usiné.

8. Procédé d'usinage électrochimique fin selon la revendication 1; dans lequel la contre-électrode (15) possède une pluralité de projections (16) dotées chacune d'une minuscule extrémité ou pointe avant disposées suivant la forme à usiner.
